# EUROPÄISCHE PATENTSCHRIFT

(11) **EP 1 480 811 B1**
(45) Veröffentlichungstag und Bekanntmachung des Hinweises auf die Patenterteilung: **27.09.2006**
(21) Anmeldenummer: 03767814.1
(22) Anmeldetag: 17.12.2003
(51) Int. Cl.: B29C 63/02, B44C 1/17, E03C 1/08

(54) **VERFAHREN ZUM AUSSENSEITIGEN BESCHICHTEN EINES SANITÄREN AUSLAUFTEILES SOWIE SANITÄRES AUSLAUFTEIL**
METHOD FOR COATING THE OUTER SIDE OF A SANITARY OUTLET PART, AND CORRESPONDING SANITARY OUTLET PART
PROCEDE POUR ENDUIRE LA FACE EXTERIEURE D'UNE PIECE DE SORTIE SANITAIRE ET PIECE DE SORTIE SANITAIRE

(30) Priorität: 21.02.2003 DE 10307386
(43) Veröffentlichungstag der Anmeldung: 01.12.2004
(73) Patentinhaber: Neoperl GmbH, 79379 Müllheim (DE)
(72) Erfinder: WILDFANG, Fabian, 79410 Badenweiler (DE)
(74) Vertreter: Maucher, Wolfgang
(86) Internationale Anmeldenummer: PCT/EP2003/014391
(87) Internationale Veröffentlichungsnummer: WO 2004/073959

(56) Entgegenhaltungen:
- EP-A- 0 229 242
- EP-A- 0 616 905
- EP-A- 0 685 676

## Beschreibung

Die Erfindung betrifft ein Verfahren zum außenseitigen Beschichten eines den Armaturenauslauf einer sanitären Auslaufarmatur umgrenzenden Kunststoffteiles. Die Erfindung befasst sich auch mit einem Auslaufteil, welches den Armaturenauslauf einer sanitären Auslaufarmatur umgrenzt.

Sanitäre Auslaufarmaturen weisen im Bereich ihres Armaturenauslaufes meist ein Auslaufmundstück oder dergleichen Auslaufteil auf, das an der Auslaufarmatur lösbar befestigt ist und den Armaturenauslauf umgrenzt. Derartige Auslaufmundstücke sind bereits in vielfältigen Ausführungen bekannt. Dabei kommt bisher als Material entweder Metall, beispielsweise Stahl oder Messing, und Kunststoff, wie zum Beispiel ABS oder Polycarbonat, zum Einsatz. Um das äußere Erscheinungsbild des Auslaufmundstückes an die Auslaufarmatur, an die das Auslaufmundstück montiert ist, anzupassen, wird das Auslaufmundstück mit einer Beschichtung versehen. Die Beschichtung erfolgt bei Metall durch das galvanische Aufbringen anderer Metalle wie zum Beispiel Chrom. Auch eine Beschichtung mittels Einbrennlackierung oder Plasmabeschichtung ist möglich. Beide Verfahren haben den Nachteil, dass sie einerseits sehr teuer und zeitaufwendig sind, andererseits eine partielle Beschichtung des Grundmaterials nicht oder nur schwer ermöglichen. Eine partielle Beschichtung ist wünschenswert, wenn beispielsweise das Einschraubgewinde des Auslaufmundstückes oder Vertiefungen oder Lochungen an der Außenseite nicht mitbeschichtet werden sollen.

Bei Kunststoff ist eine Beschichtung beispielsweise durch Lackierung möglich. Ein solches Verfahren ist aus EP-A-229242 bekannt. Auch hier ist die partielle Beschichtung des Grundmaterials sehr aufwendig, da die nicht zu beschichtenden Teile vorher abgedeckt werden müssen. Außerdem ist die Lackierung nicht langzeitig haltbar, da Lack und Kunststoff unterschiedliche Wärmeausdehnungskoeffizienten haben, wodurch nach einiger Zeit Risse im Lack entstehen können.

EP-A-229242 offenbart weiterhin, dass es ebenfalls möglich ist, ein aus Kunststoff bestehendes sanitäres Auslaufteil zu verchromen, jedoch steht dafür nur eine vergleichsweise begrenzte Anzahl geeigneter und entsprechend teurer Kunststoffe zur Verfügung.

Es besteht daher insbesondere die Aufgabe, ein Verfahren zum Beschichten eines sanitären Auslaufteiles sowie ein Auslaufteil der eingangs erwähnten Art zu schaffen, die eine kostengünstige Beschichtung eines solchen Auslaufteiles erlauben und sich gleichzeitig auch durch eine langlebige Beschichtung auszeichnen.

Diese Aufgabe wird erfindungsgemäß durch ein Verfahren gemäß Anspruch 1 und ein Auslaufteil gemäß Anspruch 10 gelöst.

Die erfindungsgemäße Lösung dieser Aufgabe sieht bei dem Verfahren der eingangs genannten Art insbesondere vor, dass wenigstens eine Schicht einer Klebe- oder Heißprägefolie auf die Außenseite des Kunststoffteiles aufgebracht wird.

Bei dem eingangs erwähnten Auslaufteil besteht die erfindungsgemäße Lösung insbesondere darin, dass das Auslaufteil als Kunststoffteil hergestellt ist, das außenseitig zumindest in einem Teilbereich wenigstens eine Schicht einer Klebe- oder Heißprägefolie trägt.

Die vorliegende Erfindung sieht vor, dass auf das den Armaturenauslauf umgrenzende und aus Kunststoffmaterial bestehende Auslaufteil außenseitig zumindest in einem Teilbereich wenigstens eine Schicht einer Klebe- oder Heißprägefolie aufgebracht wird. Solche Klebe- oder Heißprägefolien, die beispielsweise aus einer dünnen Schicht eines Heißsiegelklebers, einer darauf aufgebrachten Metallisierung, einem Schutzlack oder einer farbgebenden Schicht beispielsweise aus transparentem Kunstharzlack, einer etwa aus Wachs bestehenden Ablöseschicht sowie einem bis zum Aufbringen dieser Schichten benötigten und vorzugsweise aus einer Polyesterfolie hergestellten Trägermaterial bestehen, sind beispielsweise durch Auftragen einer Chromschicht oder dergleichen Metallisierung auf einen Heißsiegelkleber kostengünstig herstellbar. Je nach dem auf den Heißsiegelkleber aufgebrachten Material kann das Auslaufteil mit unterschiedlichen Design versehen werden. Bei einer solchen Beschichtung ist für einen Nichtfachmann nicht ohne weiteres erkennbar, ob die Beschichtung unmittelbar mittels Galvanik oder beispielsweise durch eine Heißprägefolie erfolgte.

Derartige Folien können ohne weiteres auf eine in eine Richtung plane oder leicht gewölbte Oberfläche aufgetragen werden. Die Beschichtung der Außenseite eines Auslaufteiles, welches eine zylindrische Form aufweist, ist also problemlos möglich. Im Gegensatz zu galvanischen Beschichtungen ist das Aussparen von Teilflächen bei der Beschichtung möglich, da beispielsweise Vertiefungen oder Lochungen in der planen oder leicht gewölbten Oberfläche beim Aufrollen der zur Oberfläche des Auslaufteiles parallel verlaufenden und ebenfalls planen Folie auf die zylindrische Außenseite des Auslaufteiles nicht mit beschichtet werden.

Um ein Auslaufteil derartig beschichten zu können, wird das Auslaufteil auf einen Dorn gesteckt und mit dem zu beschichtenden, vorzugsweise vollzylindrischen Außenbereich des Auslaufteiles an die gewählte Heißprägefolie gedrückt und dabei abgerollt. Durch einen hinter der Heißprägefolie befindlichen beheizten Stempel wird der Heißkleber und die Kunststoffoberfläche des aus Kunststoff bestehenden Auslaufteiles angeschmolzen und fest miteinander verbunden.

Die auf die Kunststoffoberfläche des Auslaufteiles aufgebrachte Schicht oder Schichten zeichnen sich durch ihre mechanische Abriebbeständigkeit beispielsweise gegen Scheuerpulver oder die abrassive Wirkung eines Haushaltsschwammes, durch ihre chemische Beständigkeit gegen die Säuren von Entkalkungsmitteln sowie ihre Wasser- und Temperaturbeständigkeit aus.

Dabei sieht eine bevorzugte Weiterbildung gemäß der Erfindung vor, dass die wenigstens eine Schicht zur Erzeugung einer Chrom-, Aluminium- oder dergleichen Metalloptik in zumindest einem Teilbereich eines Kunststoffteiles als metallische Schicht ausgestaltet ist.

Zweckmäßig ist es, wenn wenigstens eine metallische und/oder farbige Schicht mittels einer Klebe- und insbesondere mittels einer Heißsiegelklebeschicht auf die Außenseite des Kunststoffteiles aufgebracht ist. Dabei ist es auch möglich, wenn wenigstens eine Schicht einer Klebe- oder Heißprägefolie zumindest auf einen Teilbereich des Außenumfangs des Kunststoffteiles aufgebracht wird.

Beim Aufbringen der Schicht oder Schichten kann es vorteilhaft sein, wenn wenigstens eine Schicht einer Klebe- oder Heißprägefolie zumindest einmal umlaufend auf den Außenumfang des Kunststoffteiles aufgebracht ist. Dadurch können sich die beiden Enden des durch die Folienschicht gebildeten Wickels entweder leicht überlappen oder aber an gegenüberliegenden Stoßkanten direkt aneinandergelegt werden. Diese Stoßkanten können durch die geringen Schichtdicken der Schichten für einen Nichtfachmann praktisch unsichtbar hergestellt werden.

Beim Aufbringen mehrerer Schichten übereinander ist es zweckmäßig, wenn diese Schichten die Außenseite des Auslaufmundstückes in zumindest zwei übereinanderliegenden und insbesondere miteinander verbundenen Wickeln umläuft. Dadurch entsteht nur am Ende der Wickel eine Stoßkante, außerdem können mehrere Schichten in einem Arbeitsgang auf das Auslaufteil aufgebracht werden. Ebenso ist es denkbar, dass mehrere Wickel mit unterschiedlicher Beschichtung miteinander verbunden sind und in einem Arbeitsgang auf das Auslaufteil aufgebracht werden.

Zusätzlich zu oder statt einer auf den Außenumfang des aus Kunststoff bestehenden Auslaufteiles kann es zweckmäßig sein, wenn wenigstens eine Schicht einer Klebe- oder Heißprägefolie zumindest auf die abströmseitige Stirnseite des Kunststoffteiles aufgebracht wird. Auf diese Weise kann sowohl auf den Außenumfang als auch auf die abströmseitige Stirnseite eines Auslaufteiles eine metallisierende oder farbige Schicht aufgetragen werden.

Dabei ist es besonders vorteilhaft, wenn wenigstens eine der auf das Kunststoffteil aufgebrachten Schichten bedruckbar oder dergleichen beschriftbar ist. Eine solche Beschriftung kann ebenfalls im Heißprägeverfahren durch Andrücken einer farbigen Heißprägefolie mittels einer entsprechenden Kulisse, durch Verwendung einer zusätzlichen beschichteten Thermotransferfolie aus transparentem Material oder durch Laserbeschriften der mittels der Klebe- oder Heißsiegelfolie aufgebrachten Schicht oder Schichten erfolgen.

Insbesondere in den beiden letztgenannten Fällen ist es vorteilhaft, wenn auf eine insbesondere bedruckte oder dergleichen beschriftete Schicht einer Klebe- oder Heißprägefolie zumindest eine äußere Transparent- oder Schutzschicht aufgebracht wird, welche die durch die Beschriftung gebildeten Angriffstellen reduziert und die Beschriftung des Auslaufteiles dauerhaft sichert.

Eine bevorzugte Ausführungsform gemäß der Erfindung sieht dabei vor, dass die äußere Transparent- oder Schutzschicht als Schutzfolie ausgestaltet ist. Möglich ist aber auch, dass auf die Beschriftung nur eine transparente Schutzschicht aufgetragen oder mittels Heißkleber aufgebracht wird.

Eine besonders vorteilhafte Weiterbildung der Erfindung von eigener schutzwürdiger Bedeutung sieht vor, dass das Auslaufteil als Strahlreglergehäuse ausgebildet ist, in welchem eine Strahlzerlegeeinrichtung und/oder eine Strahlreguliereinrichtung und/oder ein Strömungsgleichrichter vorgesehen sind. Bei dieser Ausführungsform können das ansonsten übliche Auslaufmundstück einerseits und das benötigte Strahlreglergehäuse andererseits in einem einheitlichen und an der sanitären Auslaufarmatur lösbar befestigbaren Auslaufteil zusammengefasst werden, was die Montage und auch die spätere Wartung erleichtert, da weniger Einzelteile an der Auslaufarmatur befestigt werden müssen. Von besonderem Vorteil ist auch, dass bei einer solchen Ausführungsform der für den Durchfluss nutzbare lichte Querschnitt des Strahlreglers größer sein kann.

Statt dessen ist es aber auch möglich, das Auslaufteil als ein mit der sanitären Auslaufarmatur vorzugsweise lösbar verbindbares Auslaufmundstück auszugestalten.

## Patentansprüche

1. Verfahren zum außenseitigen Beschichten eines den Armaturenauslauf einer sanitären Auslaufarmatur umgrenzenden Kunststoffteiles, **dadurch gekennzeichnet, dass** wenigstens eine Schicht einer Klebe- oder Heißprägefolie auf die Außenseite des Kunststoffteiles aufgebracht wird.

2. Verfahren nach Anspruch 1, **dadurch gekennzeichnet, dass** die wenigstens eine Schicht zur Erzeugung einer Chrom-, Aluminium- oder dergleichen Metalloptik in zumindest einem Teilbereich des Kunststoffteiles als metallische Schicht ausgestaltet ist.

3. Verfahren nach Anspruch 1 oder 2, **dadurch gekennzeichnet, dass** wenigstens eine metallische und/oder farbige Schicht mittels einer Klebe- und insbesondere mittels einer Heißsiegelklebeschicht auf die Außenseite des Kunststoffteiles aufgebracht wird.

4. Verfahren nach einem der Ansprüche 1 bis 3, **dadurch gekennzeichnet, dass** wenigstens eine Schicht einer Klebe- oder Heißprägefolie zumindest auf einen Teilbereich des Außenumfangs des Kunststoffteiles aufgebracht wird.

5. Verfahren nach einem der Ansprüche 1 bis 4, **dadurch gekennzeichnet, dass** wenigstens eine Schicht einer Klebe- oder Heißprägefolie zumindest einmal umlaufend auf den Außenumfang des Kunststoffteiles aufgebracht wird.

6. Verfahren nach einem der Ansprüche 1 bis 5, **dadurch gekennzeichnet, dass** wenigstens eine Schicht einer Klebe- oder Heißprägefolie zumindest auf die abströmseitige Stirnseite des Kunststoffteiles aufgebracht wird.

7. Verfahren nach einem der Ansprüche 1 bis 6, **dadurch gekennzeichnet, dass** wenigstens eine der auf das Kunststoffteil aufgebrachten Schichten bedruckbar oder dergleichen beschriftbar ist.

8. Verfahren nach einem der Ansprüche 1 bis 7, **dadurch gekennzeichnet, dass** auf eine insbesondere bedruckte oder dergleichen beschriftete Schicht einer Klebe- oder Heißprägefolie zumindest eine äußere Transparent- oder Schutzschicht aufgebracht wird.

9. Verfahren nach einem der Ansprüche 1 bis 8, **dadurch gekennzeichnet, dass** die äußere Transparent- oder Schutzschicht als Schutzfolie ausgestaltet ist.

10. Auslaufteil, welches den Armaturenauslauf einer sanitären Auslaufarmatur umgrenzt, wobei das Auslaufteil als Kunststoffteil hergestellt ist, **dadurch gekennzeichnet, dass** des Kunststoffteil außenseitig zumindest in einem Teilbereich wenigstens eine Schicht einer Klebe- oder Heißprägefolie trägt.

11. Auslaufteil nach Anspruch 10, **dadurch gekennzeichnet, dass** die wenigstens eine Schicht zur Erzeugung einer Chrom-, Aluminium- oder dergleichen Metalloptik in zumindest einem Teilbereich des Kunststoffteiles als metallische Schicht ausgestaltet ist.

12. Auslaufteil nach Anspruch 10 oder 11, **dadurch gekennzeichnet, dass** wenigstens eine metallische und/oder farbige Schicht mittels einer Klebe- und insbesondere mittels einer Heißsiegelklebeschicht auf die Außenseite des Kunststoffteiles aufgebracht ist.

13. Auslaufteil nach einem der Ansprüche 10 bis 12, **dadurch gekennzeichnet, dass** wenigstens eine Schicht einer Klebe- oder Heißprägefolie zumindest auf einen Teilbereich des Außenumfangs des Kunststoffteiles aufgebracht ist.

14. Auslaufteil nach einem der Ansprüche 10 bis 13, **dadurch gekennzeichnet, dass** wenigstens eine Schicht einer Klebe- oder Heißprägefolie zumindest einmal umlaufend auf den Außenumfang des Kunststoffteiles aufgebracht ist.

15. Auslaufteil nach einem der Ansprüche 10 bis 14, **dadurch gekennzeichnet, dass** wenigstens eine Schicht einer Klebe- oder Heißprägefolie zumindest auf die abströmseitige Stirnseite des Kunststoffteiles aufgebracht ist.

16. Auslaufteil nach einem der Ansprüche 10 bis 15, **dadurch gekennzeichnet, dass** wenigstens eine der auf das Kunststoffteil aufgebrachten Schichten bedruckbar oder dergleichen beschriftbar ist.

17. Auslaufteil nach einem der Ansprüche 10 bis 16, **dadurch gekennzeichnet, dass** auch eine insbesondere bedruckte oder dergleichen beschriftete Schicht einer Klebe- oder Heißprägefolie zumindest eine äußere Transparent- oder Schutzschicht aufgebracht ist.

18. Auslaufteil nach einem der Ansprüche 10 bis 17, **dadurch gekennzeichnet, dass** die äußere Transparent- oder Schutzschicht als Schutzfolie ausgestaltet ist.

19. Auslaufteil nach einem der Ansprüche 10 bis 18, **dadurch gekennzeichnet, dass** das Auslaufteil als Strahlreglergehäuse ausgebildet ist, in dem eine Strahlzerlegeeinrichtung und/oder eine Strahlreguliereinrichtung und/oder ein Strömungsgleichrichter vorgesehen sind.

20. Auslaufteil nach einem der Ansprüche 10 bis 19, **dadurch gekennzeichnet, dass** das Auslaufteil als ein mit der sanitären Auslaufarmatur vorzugsweise lösbar verbindbares Auslaufmundstück ausgestaltet ist.

## Claims

1. Method for coating the outer side of a plastic element defining the outlet of a sanitary outlet fitting, **characterised in that** at least one layer of an adhesive or hot-stamping film is applied to the outer side of the plastic element.

2. Method according to claim 1, **characterised in that** the minimum of one layer for producing a chrome, aluminium or similar metal finish is constructed as a metal layer in at least one part of the plastic element.

3. Method according to claim 1 or 2, **characterised in that** at least one metal and/or coloured layer is applied to the outside of the plastic element by means of an adhesive layer and particularly by means of a hot-seal adhesive layer.

4. Method according to one of claims 1 to 3, **characterised in that** at least one layer of an adhesive or hot-stamping film is applied to at least part of the outer circumference of the plastic element.

5. Method according to one of claims 1 to 4, **characterised in that** at least one layer of an adhesive or hot-stamping film is applied so as to encircle the outer circumference of the plastic fitting at least once.

6. Method according to one of claims 1 to 5, **characterised in that** at least one layer of an adhesive or hot-stamping film is applied at least to the downstream end of the plastic element.

7. Method according to one of claims 1 to 6, **characterised in that** at least one of the layers applied to the plastic element can be printed on or similarly inscribed.

8. Method according to one of claims 1 to 7, **characterised in that** at least one external transparent or protective layer is applied to an in particular printed or similarly inscribed layer of an adhesive or hot-stamping film.

9. Method according to one of claims 1 to 8, **characterised in that** the outer transparent or protective layer is constructed as a protective film.

10. Outlet part which surrounds the outlet of a sanitary outlet fitting, the outlet part being manufactured as a plastic element, **characterised in that** the plastic element carries on its outside, at least in one area, at least one layer of an adhesive or hot-stamping film.

11. Outlet part according to claim 10, **characterised in that** the minimum of one layer is constructed as a metallic layer for producing a chrome, aluminium or similar metallic finish in at least one part of the plastic element.

12. Outlet part according to claim 10 or 11, **characterised in that** at least one metallic and/or coloured layer is applied to the outside of the plastic element by means of an adhesive layer and in particular by means of a hot-seal adhesive layer.

13. Outlet part according to one of claims 10 to 12, **characterised in that** at least one layer of an adhesive or hot-stamping film is applied to at least part of the outer circumference of the plastic element.

14. Outlet part according to one of claims 10 to 13, **characterised in that** at least one layer of an adhesive or hot-stamping film is applied to the outer circumference of the plastic element so as to encircle it at least once.

15. Outlet part according to one of claims 10 to 14, **characterised in that** at least one layer of an adhesive or hot-stamping film is applied at least to the downstream end of the plastic element.

16. Outlet part according to one of claims 10 to 15, **characterised in that** at least one of the layers applied to the plastic part can be printed on or similarly inscribed.

17. Outlet part according to one of claims 10 to 16, **characterised in that** at least one outer transparent or protective layer is applied to an in particular printed or similarly inscribed layer of an adhesive or hot-stamping film.

18. Outlet part according to one of claims 10 to 17, **characterised in that** the outer transparent or protective layer is in the form of a protective film.

19. Outlet part according to one of claims 10 to 18, **characterised in that** the outlet part is constructed as a flow regulator housing in which are provided a flow disintegrating device and/or a flow regulating device and/or a flow rectifier.

20. Outlet part according to one of claims 10 to 19, **characterised in that** the outlet part is constructed as an outlet mouthpiece which can be connected, preferably releasably, to the sanitary outlet fitting.

## Revendications

1. Procédé pour enduire la face extérieure d'une pièce en plastique entourant le robinet de sortie d'une robinetterie sanitaire, **caractérisé en ce qu'**au moins une couche d'une feuille adhésive ou estampée à chaud est appliquée sur la face extérieure de la pièce en plastique.

2. Procédé selon la revendication 1, **caractérisé en ce que** la au moins une couche destinée à obtenir une optique en chrome, aluminium ou métal du même genre dans au moins une zone partielle de la pièce en plastique est conçue en tant que couche métallique.

3. Procédé selon la revendication 1 ou 2, **caractérisée en ce qu'**au moins une couche métallique et/ou chromatique est appliquée au moyen d'une couche adhésive et en particulier au moyen d'une couche adhésive thermocollante sur la face extérieure de la pièce en plastique.

4. Procédé selon l'une quelconque des revendications 1 à 3, **caractérisé en ce qu'**au moins une couche d'une feuille adhésive ou estampée à chaud est appliquée au moins sur une zone partielle de la circonférence extérieure de la pièce en plastique.

5. Procédé selon l'une quelconque des revendications 1 à 4, **caractérisé en ce qu'**au moins une couche d'une feuille adhésive ou estampée à chaud est appliquée au moins une fois autour de la circonférence extérieure de la pièce en plastique.

6. Procédé selon l'une quelconque des revendications 1 à 5, **caractérisé en ce qu'**au moins une couche d'une feuille adhésive ou estampée à chaud est appliquée au moins sur la face avant du côté de l'écoulement de la pièce en plastique.

7. Procédé selon l'une quelconque des revendications 1 à 6, **caractérisé en qu'**au moins une des couches appliquées sur la pièce en plastique peut recevoir des impressions ou inscriptions du même genre.

8. Procédé selon l'une quelconque des revendications 1 à 7, **caractérisé en ce qu'**au moins une couche transparente ou protectrice externe est appliquée sur une couche présentant notamment des impressions ou inscriptions du même genre d'une feuille adhésive ou estampée à chaud.

9. Procédé selon l'une quelconque des revendications 1 à 8, **caractérisé en ce que** la couche transparente ou protectrice externe est conçue en tant que feuille protectrice.

10. Pièce de sortie entourant le robinet de sortie d'une robinetterie sanitaire, la pièce de sortie étant fabriquée en tant que pièce en plastique, **caractérisée en ce que** la pièce en plastique porte sur sa face extérieure au moins dans une zone partielle au moins une couche d'une feuille adhésive ou estampée à chaud.

11. Pièce de sortie selon la revendication 10, **caractérisée en ce que** la au moins une couche destinée à obtenir une optique en chrome, aluminium ou en métal de ce genre dans au moins une zone partielle de la pièce en plastique est conçue en tant que couche métallique.

12. Pièce de sortie selon la revendication 10 ou 11, **caractérisée en ce qu'**au moins une couche métallique et/ou chromique est appliquée au moyen d'une couche adhésive et en particulier au moyen d'une couche adhésive thermocollante sur la face extérieure de la pièce en plastique.

13. Pièce de sortie selon l'une quelconque des revendications 10 à 12, **caractérisée en ce qu'**au moins une couche d'une feuille adhésive ou estampée à chaud est appliquée au moins sur une zone partielle de la circonférence extérieure de la pièce en plastique.

14. Pièce de sortie selon l'une quelconque des revendications 10 à 13, **caractérisée en ce qu'**au moins une couche d'une feuille adhésive ou estampée à chaud est appliquée au moins une fois autour de la circonférence extérieure de la pièce en plastique.

15. Pièce de sortie selon l'une quelconque des revendications 10 à 14, **caractérisée en ce qu'**au moins une couche d'une feuille adhésive ou estampée à chaud est appliquée au moins sur la face avant du côté de l'écoulement de la pièce en plastique.

16. Pièce de sortie selon l'une quelconque des revendications 10 à 15, **caractérisée en qu'**au moins une des couches appliquées sur la pièce en plastique peut recevoir des impressions ou inscriptions du même genre.

17. Pièce de sortie selon l'une quelconque des revendications 10 à 16, **caractérisée en ce qu'**au moins une couche transparente ou protectrice externe est appliquée sur une couche présentant notamment des impressions ou inscriptions du même genre d'une feuille adhésive ou estampée à chaud.

18. Pièce de sortie selon l'une quelconque des revendications 10 à 17, **caractérisée en ce que** la couche transparente ou protectrice externe est conçue en tant que feuille protectrice.

19. Pièce de sortie selon l'une quelconque des revendications 10 à 18, **caractérisée en ce que** la pièce de sortie est conçue en tant que logement du régulateur du jet, dans lequel une installation de décomposition du jet et/ou une installation de régulation du jet et/ou un redresseur d'écoulement sont prévus.

20. Pièce de sortie selon l'une quelconque des revendications 10 à 19, **caractérisée en ce que** la pièce de sortie est conçue en tant qu'un bec de sortie raccordable de préférence de manière amovible avec la robinetterie sanitaire.
